# EUROPEAN PATENT APPLICATION

(11) **EP 0 898 406 A2**
(43) Date of publication of application: **24.02.1999**
(21) Application number: 98306564.0
(22) Date of filing: 18.08.1998
(51) Int. Cl.: H04M 1/65

(54) **Answering machine providing paging option**

(30) Priority: 21.08.1997 US 915779
(71) Applicant: LUCENT TECHNOLOGIES INC., Murray Hill, New Jersey 07974-0636 (US)
(72) Inventor: Kaufman, Steven B., Emmaus, Pennsylvania 18049 (US)
(74) Representative: Buckley, Christopher Simon Thirsk

(57) **Abstract**

A telephone call handling device includes an incoming call select unit (111), a calling unit (113), and a recording unit (115). The incoming call select unit (111) provides a prompt to an incoming caller and responds to a selection made by the incoming caller. The calling unit (113) selectively calls a forwarding number in response to the selection made by the incoming caller. The recording unit (115) selectively records a message in response to the selection made by the incoming caller. In an alternative embodiment, a method of handling an incoming call includes the steps of providing a prompt to an incoming caller, receiving a response from the incoming caller, and selectively calling a forwarding number based on the received response.

## Description

### Cross Reference to Related Applications

This application is related to U.S. Patent Application No. (Kaufman 1), filed on even date herewith and incorporated herein by reference.

### Technical Field of the Invention

This invention is related to an apparatus and method for providing a paging option to an incoming caller. More particularly, this invention relates to an answering machine that provides an incoming caller with the option to send a page to the intended party instead of or in addition to leaving a message.

### Background of the Invention

Some telephones and telephone systems provide call related information in conjunction with the establishment of a telephone call connection. For example, some consumer telephones support a Caller ID feature which provides an identification of a calling party. Caller ID information typically includes the telephone number and area code of the calling party and the time and date of the call. Other information, such as a name associated with the calling party, may also be supplied. Caller ID information is typically made available on a display device located proximate to, or incorporated into, the telephone associated with the called party. There are two different physical conditions during which caller ID information can be sent to a telephone. During a first condition, referred to as Type I caller ID, the called telephone is not in use and is in an on-hook state. In this case, the caller ID data is sent as an encoded signal between the first and second rings. During a second condition, referred to as Type II caller ID, and also known as caller ID with call waiting, the called telephone is in use and normal voice conversation is interrupted to send the caller ID data.

In a non-consumer environment, such as an office building, call related information may be provided to the called party by an intermediate machine, such as a central switch. The information provided by the central switch may be identical to that provided as caller ID information in the consumer environment. However, the central switch may be capable of providing additional information, or may discriminate between internal calls, for which additional information is provided, and external calls, for which limited information is provided or for which caller ID information is forwarded.

Telephone answering systems also appear in both a consumer-oriented implementation, such as a telephone answering machine, and a business-implementation, such as a "voicemail" system. These systems typically record a message from an incoming caller when an incoming call has not been answered within a predetermined number of rings. A telephone answering machine, which may be configured as a stand-alone unit or may be incorporated into a telephone, conventionally records a message in analog form onto a tape or in digital form through use of logic incorporated into a digital signal processor, a microcontroller, or an application specific integrated circuit. The stored message is then available for operator playback by activating a playback function through, for example, pressing a button on the telephone answering machine, or by remotely activating the telephone answering machine through a predetermined signaling scheme.

In a non-consumer orientation, businesses typically incorporate telephone answering features into their telephone systems. One such feature, typically referred to as "voicemail," provides telephone answering functionality similar to that provided by the consumer-oriented telephone answering machine. A central switch or other intermediate machine stores and processes voicemail messages. Incoming calls that are not answered within a predetermined number of rings are typically handled by the intermediate machine to play a prerecorded greeting to an incoming caller and record a message from the incoming caller. A user of a telephone in such a voicemail system typically checks for messages by calling a special number, and, in response to queries from the intermediate machine, entering the user's extension number (or other identifier), and a personal identification number.

In the consumer-oriented telephone answering machine, and in the business-oriented voicemail system, the calling party has only two or three options. Generally, the calling party has a first option of leaving a message or a second option of not leaving a message and calling back at a later time. In addition, especially in the business environment, the calling party may have the option of pressing a specified key on the calling party's telephone to transfer to another party who works with the intended party. However, the telephone answering device does not provide a mechanism for the calling party to immediately get a message to the intended party.

### Summary of the Invention

According to the invention, a telephone call handling device includes an incoming call select unit adapted to provide a prompt to an incoming caller and to respond to a selection made by the incoming caller, a calling unit adapted to selectively call a forwarding number in response to the selection made by the incoming caller, and a recording unit adapted to selectively record a message in response to the selection made by the incoming caller, so that the incoming caller is provided the option of immediately getting a message to the intended party.

In an alternative embodiment, a method of handling an incoming call includes providing a prompt to an incoming caller, receiving a response from the incoming caller, and selectively calling a forwarding number based on the received response.

### Brief Description of the Drawings

Figure 1 is a simplified block diagram showing an exemplary embodiment of a telephone answering device according to the invention;
Figure 2 is a flowchart showing a method of handling an incoming call according to the invention; and
Figure 3 is a flowchart showing an alternative method of handling an incoming call according to the invention.

### Detailed Description

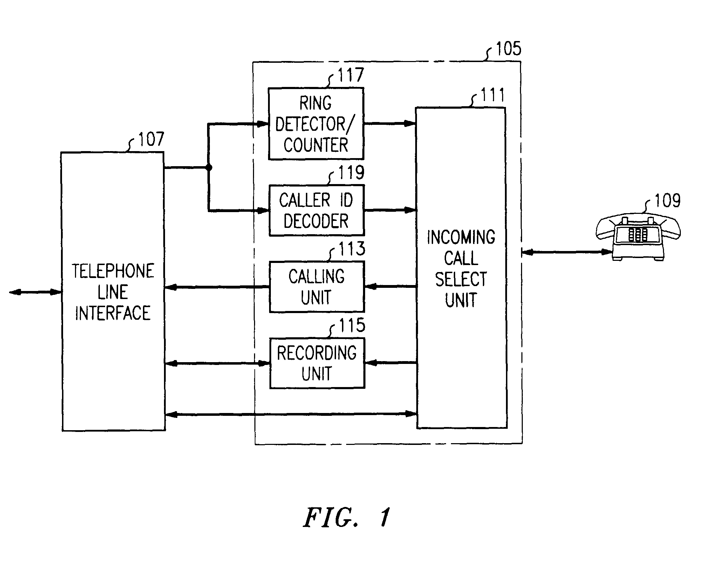

As shown in Figure 1, a telephone answering device 105 is coupled to a telephone line interface 107 and to a telephone 109. Telephone answering device 105 includes an incoming call select unit 111, a calling unit 113 and a recording unit 115. According to the invention, the incoming call select unit 111 provides a prompt to an incoming caller via telephone line interface 107, and enables calling unit 113 and/or recording unit 115 based on a response received from the incoming caller via telephone line interface 107. If enabled by incoming call select unit 111, calling unit 113 subsequently calls a forwarding number with a paging signal.

In this example, telephone answering device 105 also includes a ring detector/counter 117 and a caller ID decoder 119. The ring detector/counter 117 detects and counts ring signals associated with an incoming call and provides incoming call select unit 111 with an indication that a threshold number of ring signals has been met or exceeded. Ring detector/counter 117 may also sense whether a switchhook associated with telephone 109 has been activated. Operationally, after ring detector/counter 117 determines that the threshold number of rings have occurred in the absence of switchhook activation, it enables incoming call select unit 111 to issue a prompt to the incoming caller via the telephone line interface 107. The prompt will give the incoming caller a plurality of options.

An initial option provided by the prompt can be, for example, to leave a message in a "conventional" manner, wherein the prompt states that nobody is available to answer the call, and asks the calling party to "please leave a message after the beep." Alternatively, according to the invention, the prompt may give the calling party the option to send a paging signal to the intended (i.e. "target") party. In this context, the intended party is presumed to be the party whose phone number corresponds to a phone number of the telephone 109. Of course, more than one party may be associated with the phone number of telephone 109, in which case the incoming call select unit may issue another prompt to determine which of the parties associated with the number of telephone 109 is in fact the intended party.

Incoming call select unit 111 then receives a response to the prompt from the incoming caller and acts, based on the response, to enable calling unit 113 to place a paging call, and/or to enable recording unit 115 to record a message. According to the invention, the telephone answering device 105 may be configured to enable the incoming caller to respond to the prompt by sending a dual tone multi-frequency (DTMF) signal (also referred to as a "DTMF tone") created by the incoming caller activating one or more keys on a keypad of the incoming caller's telephone. In this case, the incoming call select unit will contain circuitry necessary for decoding the DTMF tone and acting to enable the calling unit 113 and/or the recording unit 115 based on the decoded DTMF tone.

Alternatively, the telephone answering device 105 may be configured to enable the incoming caller to respond to the prompt with voice commands, and the incoming call select unit will contain voice recognition capability to interpret the voice commands and enable the calling unit 113 and/or the recording unit 115 based on the voice commands.

If the incoming caller elects to send a paging signal, the incoming call select unit 111, in one exemplary embodiment, provides caller ID data associated with the incoming caller, and decoded by the caller ID decoder 119, to the calling unit 113. The caller ID data can include the calling party's telephone number, and can further include the name of an individual (presumably the calling party) associated with the calling party's telephone number). Calling unit 113 then calls the forwarding number associated with the target party's pager and leaves a paging signal containing the caller ID data. The paging signal can further identify the time the call was received, can indicate whether the calling party elected to leave a message in addition to the page, and if so, can indicate the length of the message left.

In an alternative embodiment, the incoming call select unit 111 can employ the aforementioned voice recognition capability to receive a voice message from the incoming caller and convert the voice message into a text message. The calling unit, in this embodiment, can then send the text message as part of the paging call, either in addition to or in place of the caller ID data.

In the above embodiments, the calling unit 113 has *a priori* knowledge of the target party's pager number, or, if more than one party uses telephone 109, has knowledge of individual pager numbers associated with each of the parties. Thus, when the incoming caller elects to send a paging signal to the target party, the calling unit 113 looks up the appropriate pager number and places the paging call. Alternatively, incoming call select unit 111 can prompt the incoming caller to provide a pager number to which the paging call should be sent. In exemplary embodiments, the incoming call select unit can be configured to receive DTMF tones identifying the pager number, or can utilize the aforementioned voice recognition capability to interpret a spoken pager number. According to these embodiments, the calling party has the advantage of both leaving a message and sending the target party a paging signal indicating that a message was left (and, optionally, the message duration). This capability is an advantage over conventional systems that require the calling party to complete the call with the answering machine, and to then place a separate call to the target party's pager number. In such a conventional system, the target party simply receives a page from the calling party, but is not automatically aware that the calling party left a message on the target party's answering device.

In another alternative, the incoming call select unit 111 can be configured to provide the calling party with a choice of paging numbers, or target parties, to which to send the paging signal. Incoming call select unit 111, in this embodiment, will respond to a selection made by the incoming caller by way of one or more DTMF tones or by way of a voice command, to call the paging number associated with the selected target party.

In yet another alternative embodiment, the incoming caller can be provided the option of sending a voice page to the target party. In this embodiment, if the incoming caller elects to send a voice page, the incoming call select unit causes the recording unit 115 to record a message from the incoming caller, causes the calling unit 113 to place a paging call to a voice paging number, and causes the recording unit 115 to play back the recorded message as the voice page.

Incoming call select unit 111, calling unit 113, recording unit 115, ring detector/counter 117, and caller ID decoder 119 may be incorporated into a digital signal processor, such as an integrated circuit digital signal processor, and/or a microcontroller that controls a variety of other telephone answering device features in addition to those described herein with respect to the present invention. For example, the digital signal processor will enable a telephone call to be connected between telephone 109 and telephone line interface 107 if telephone 109 is answered prior to the ring detector/counter 117 counting a number of rings corresponding to the threshold. Further, the DSP will also enable such a telephone call to take place if telephone 109 is answered while recording unit 115 is in the process of recording a message, or while calling unit 113 is in the process of placing a call to the forwarding number.

The telephone answering device 105 can be configured to enable every incoming call that is not answered within a predetermined number of rings to generate a subsequent prompt to the incoming caller providing the incoming caller with the options described above (i.e., leave a message and/or send a page to the target party). Alternatively, the system can be configured to use incoming call select unit 111 to screen incoming calls so that only the ability to send a page to the target party is limited based on particular parameters. For example, only previously selected call sources (i.e., "pre-approved" call sources) may receive the prompt enabling paging, while all other call sources are handled in a "conventional" manner wherein the call source hears a message indicating that the target party is not available and is thus provided an opportunity to leave a message. Further, the paging option can be limited based on time of day, area code of the calling party, or any other parameter.

In an alternative embodiment, incoming call select unit 111 may serve an additional function of determining, if the incoming call is not answered within the threshold number of rings, whether it is a Type I situation or a Type II situation. In a Type I situation, telephone 109 is on-hook. In this situation, according to this embodiment, a prompt may be provided to the incoming caller providing the option of sending a paging signal, and a paging call will be placed if the incoming caller elects to do so. In a Type II situation, on the other hand, telephone 109 is off-hook (i.e., is currently being used as part of a telephone call). In this situation, according to this embodiment, a paging option may be made unavailable since the fact that telephone 109 is off-hook presumptively implies that a user of telephone 109, such as the target party, is aware of the incoming call by way of conventional call waiting signaling methods, and is also aware of the caller ID data associated with the incoming call. Since the target party is aware of the incoming caller ID data, according to this embodiment, incoming call select unit 111 provides a paging option to an incoming caller only in Type I situations, and may be further configured , as discussed above, to only provide this option for specific pre-approved call sources.

The above-described discrimination between Type I situations and Type II situations can be selective. For example, a user of telephone 109, upon receiving an indication that a Type II Caller ID message is being received, can provide input to telephone 109 to cause incoming call select unit 111 to enable or disable the paging feature for this incoming call. The ability to enable or disable the paging feature can be limited to users having knowledge of a personal identification number (PIN). Thus, for example, when a principal user of telephone 109 is presently engaged in a telephone conversation with a first party, and a second party is placing an incoming call, the principal user can enter a command and a PIN number to incoming call select unit 111 to disable calling unit 113. When, however, a user other than the principal user (i.e., a user that does not know the PIN) is engaged in a telephone conversation at the time of an incoming call, the incoming caller will receive the prompt providing the paging option, or will be provided the paging option if the incoming call is from a pre-approved call source.

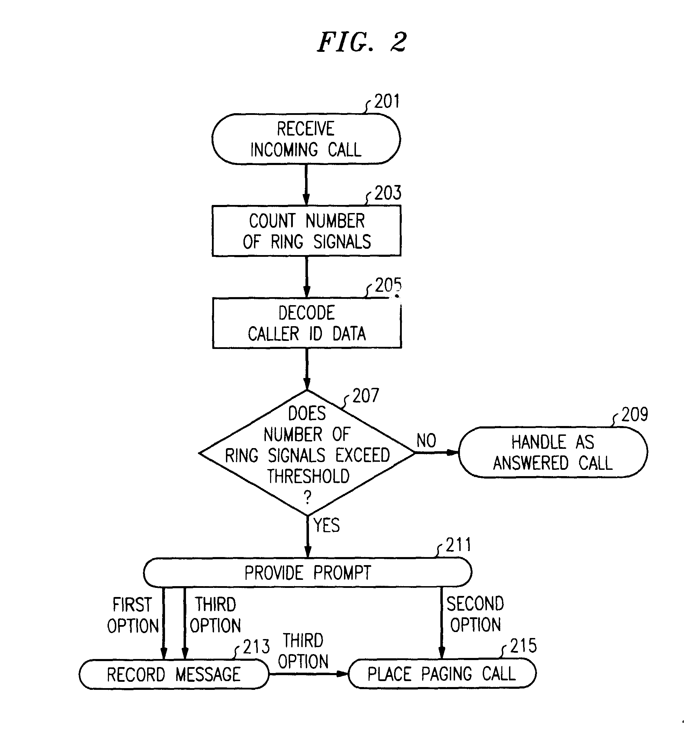

Figure 2 provides an operational flowchart of an example of a method of handling an incoming call according to the invention. At step 201, an incoming call is received via telephone line interface 107. At step 203, ring detector/counter 117 counts a number of ring signals from the incoming call. At step 205, caller ID decoder 119 decodes caller ID data in the incoming call. It is understood, of course, that steps 203 and 205 can occur in parallel or in any order as caller ID decoder 119 and ring detector/counter 117 can be operating simultaneously. At step 207, ring detector/counter 115 determines if the number of ring signals exceeds the ring threshold. An example of a ring threshold is four rings. If the number of ring signals does not exceed four rings, or if switchhook activity is detected, indicating that a party has caused telephone 109 to transition into an off-hook state, then in step 209 the call is handled as an answered call. Alternatively, if the number of ring signals does exceed the threshold, then according to the first exemplary method, incoming call select unit 111 will provide a prompt to the incoming caller at step 211, the prompt will, for example, enable the incoming caller to select from a first option to leave a message, a second option to page the target party, and a third option to both leave a message and page the target party.

If the first option is selected, at step 213 the recording unit 115 will record a message. If the second option is selected, at step 215, the calling unit 113 will place a paging call to a call forwarding number. If the third option is selected, then recording unit 115 will record a message at step 213 and calling unit 113 will then place a paging call at step 215. In placing the paging call, calling unit 113 should wait until the present call is complete, such as, by waiting for an indication via telephone line interface 107 that the calling party has returned to an on-hook state. At this time, telephone line interface 107 will be free to enable calling unit 113 to place the paging call to the target party.

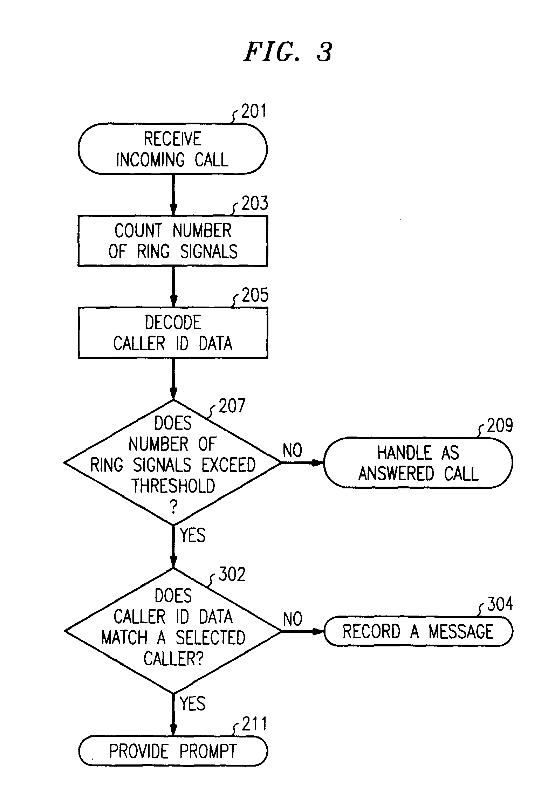

Figure 3 shows an alternative method of handling an incoming call according to the invention. Here, steps 201, 203, 205, 207 and 209 are equivalent to the like-numbered steps in Figure 2. In the method of Figure 3, however, if the number of ring signals exceeds the threshold in step 207, then at step 302 the incoming call select unit 111 determines if the caller ID data decoded by caller ID decoder 119 matches a selected caller (i.e., a caller previously pre-approved by the target party). If the answer to the inquiry in step 302 is NO, then a conventional prompt is provided to the incoming caller at step 304 and a message is recorded via recording unit 115. The process of recording a message can encompass, for example, recording unit 115 providing a prerecorded greeting to the calling party via telephone line interface 107, and the calling party subsequently providing a message to be stored on a tape or in a memory of recording unit 115. If the answer to the inquiry at step 302 is that the caller ID data matches a selected caller, then the prompt is provided to the incoming caller at step 211.

In each of the above examples, the invention is described as placing a paging call to the target party. It is, of course, within the scope of the invention for the paging call to be placed to more than one party based on input provided by the incoming caller. Further, each of the methods of Figures 2 and 3 can be modified to include a step to determine if telephone 109 is off-hook, in a Type II situation, in which case only the conventional option of recording a message may be preferred.

The aforementioned embodiments describe the invention primarily in the consumer environment, wherein the functionality of the invention is resident in a telephone or in a device proximate to the telephone. The principals of the invention, however, also extend to the business telephone environment, wherein the functionality of the invention is resident in an intermediate machine, such as a central switch. In such an environment, for example, an incoming caller to a voicemail system administered by an intermediate machine can be provided a prompt from the intermediate machine giving the incoming caller the conventional option to leave a message, and additionally giving the incoming caller the option to initiate a paging call to the target party (i.e., the party having a voicemail box associated with a number dialed by the incoming caller).

As in the consumer-environment embodiment, the option to initiate a paging call can be provided only to select incoming callers based on various parameters, including, for example, caller ID data or other call related information associated with the incoming call, time of day information, day or date information, or any other parameter. In these examples, the intermediate machine determines that the target party has not answered the target party's telephone (or has placed the target party's telephone in a mode in which all calls are forwarded for automated handling). The intermediate machine then determines if the paging option is being offered on a discriminating basis, in which case it determines if the parameter(s) necessary for the paging option have been met. If the parameter(s) have been met, then the intermediate machine provides the incoming caller with a prompt giving the incoming caller the option to initiate a paging call, either instead of or after leaving a conventional message, and acts according to a selection made by the incoming caller.

## Claims

1. A telephone call handling device, comprising:
an incoming call select unit (111) adapted to provide a prompt to an incoming caller and to respond to a selection made by the incoming caller;
a calling unit (113) adapted to selectively call a forwarding number in response to the selection made by the incoming caller; and
a recording unit (115) adapted to selectively record a message in response to the selection made by the incoming caller.

2. A telephone call handling device as recited in claim 1, further comprising a ring counter (117) adapted to count a number of ring signals in an incoming call and to enable the incoming call select unit (111) based on the counted number of ring signals.

3. A telephone call handling device as recited in claim 1, wherein the prompt provided by the incoming call select unit (111) provides the calling party with a first option to send a paging signal to the forwarding number via the calling unit (113), the first option including the option of the calling unit (113) executing a script as part of the step of calling the forwarding number, and the prompt provided by the incoming call select unit (111) provides the calling party with a second option to record a message via the recording unit (115).

4. A telephone call handling device as recited in claim 3, wherein the telephone answering device further includes a caller ID decode (119) adapted to decode caller ID data received with an incoming call, and wherein the first option to send a paging signal via the calling unit (111) further includes the option to have the paging signal include the caller ID data.

5. A telephone call handling device as recited in claim 4, wherein the incoming call select unit (111) is further adapted to compare the caller ID data with predetermined information, and wherein the prompt provided by the incoming call select unit (111) is based on a result of the comparison.

6. A telephone call handling device, comprising:
call select means (111) for providing a prompt to an incoming caller and for responding to a selection made by the incoming caller;
calling means (113) for calling a forwarding number in response to the selection made by the incoming caller; and
recording means (115) for recording a message in response to the selection made by the incoming caller.

7. A telephone call handling device as recited in claim 6, further comprising ring counting means (117) for counting a number of ring signals in an incoming call and to enable the call select means (111) based on the counted number of ring signals.

8. A method of handling an incoming call, comprising the steps of:
providing a prompt to an incoming caller;
receiving a response from the incoming caller; and
selectively calling a forwarding number message based on the received response.

9. A method as recited in claim 8, further comprising the step of selectively recording a message based on the received response.

10. A method of handling an incoming call as recited in claim 8, further comprising the steps of:
counting a number of ring signals in an incoming call;
comparing the counted number of rings to a threshold; and
enabling the step of providing the prompt to the incoming caller only when the counted number of rings reaches the threshold.
